# EUROPÄISCHE PATENTSCHRIFT

(11) **EP 2 590 514 B1**
(45) Veröffentlichungstag und Bekanntmachung des Hinweises auf die Patenterteilung: **06.08.2014**
(21) Anmeldenummer: 11838978.2
(22) Anmeldetag: 15.12.2011
(51) Int. Cl.: A23G 1/40, A23G 1/42

(54) **SCHOKOLADENMASSE**
CHOCOLATE MASS
MATIÈRE DE CHOCOLAT

(30) Priorität: 06.01.2011 DE 102011008016
(43) Veröffentlichungstag der Anmeldung: 15.05.2013
(73) Patentinhaber: Coy, Johannes, 64853 Otzberg (DE)
(72) Erfinder: Coy, Johannes, 64853 Otzberg (DE)
(74) Vertreter: Rudolph, Ulrike
(86) Internationale Anmeldenummer: PCT/DE2011/002131
(87) Internationale Veröffentlichungsnummer: WO 2012/092916

(56) Entgegenhaltungen:
- WO-A1-2006/094716
- WO-A1-2007/073187
- WO-A1-2010/117344
- DE-A1-102006 014 543
- US-A1- 2008 260 925

## Beschreibung

Die Erfindung betrifft eine neue Schokoladenmasse.

Schokolade ist seit Jahrzehnten in allen Bevölkerungsgruppen ein beliebtes Genussmittel und weist in bisherigen Zusammensetzungen sowohl gesundheitsfördernde Eigenschaften als auch potentiell gesundheitsschädigende Eigenschaften auf.

Schokolade wird aus den Samen des Kakaobaums, den sogenannten Kakaobohnen, hergestellt. Üblicherweise werden Kakaobohnen für die Schokoladeherstellung geröstet. Das Rösten erfolgt entweder vor oder nach dem Entfernen der Bohnenschale (bzw. Samenschale). Die von der Bohnenschale befreiten Kakaosamen/Kakaobohnen, der sogenannte Kakaokernbruch oder Kakaobruch (oder "Nibs") wird zermahlen. Dabei wird die Kakaobutter frei und bildet mit den fein gemahlenen Kakao(kern)bruchresten die flüssige Kakaomasse. Aus dieser Kakaomasse wird je nach Weiterverarbeitung entweder Kakaopulver oder Schokolade hergestellt.

Für die Herstellung von Schokolade wird die Kakaomasse je nach Rezept mit unterschiedlichen Mengen an Kakaobutter, Zucker, eventuell Milchpulver und anderen Zutaten zur Schokoladenmasse vermischt.

Damit die Schokolade eine möglichst weiche Konsistenz bekommt und man auf der Zunge kein "sandiges" Gefühl mehr hat, wird die Schokoladenmasse in einem Raffineur gewalzt. Danach wird die Schokoladenmasse conchiert, vorkristallisiert (d. h. gekühlt, bis der Fettanteil in der Schokolade erste Erstarrungskristalle bildet) und schließlich in die gewünschte Form gegossen und auf Verpackungstemperatur abgekühlt.

Diese Schokoladenmasse ist die Grundsubstanz für Schokoladenerzeugnisse (Synonym: Schokoladenprodukte) gemäß Anlage 1, Nr. 3 bis 10 und 2 (c) und 2 (d) der deutschen Kakaoverordnung vom 15. Dezember 2003 (BGB1. I S. 2738), zuletzt geändert durch Artikel 2 der Verordnung vom 30. September 2008 (BGB1. I S. 1911).

Die meisten handelsüblichen herkömmlichen Schokoladenmassen und die daraus hergestellten Schokoladenerzeugnisse, weisen - mit Ausnahme der sogenannten Bitterschokoladen und einiger Spezialschokoladen - einen relativ hohen Gehalt an Saccharose (Rohrzucker) auf. Saccharose besitzt einen hohen glykämischen Index. Zucker mit hohem glykämischen Index müssen bzw. sollten jedoch insbesondere von Diabetes-Typ-2-Patienten und von Krebs-Patienten gemieden werden.

Die aktuelle Zunahme der Inzidenz von Diabetes Typ 2 unterstreicht zudem die Notwendigkeit der Bereitstellung von Nahrungsmitteln, die einen relativ geringen glykämischen Index (GI) und eine relativ geringe glykämische Last (GL) haben und deshalb nur einen relativ niedrigen Insulinausstoß bewirken.

Die Erkrankung Krebs ist bei Diabetikern häufiger als im Durchschnitt der Bevölkerung. Die aktuell hohe Kohlenhydrataufnahme in der Bevölkerung der westlichen Industrienationen und der zunehmende Kohlenhydratkonsum in Ländern wie Indien und China führen nicht nur zu einer weiter steigenden Inzidenz von Diabetes, sondern auch von Krebs.

Krebs ist ein mehrstufiger Prozess, der aus einer gesunden Zelle über eine gutartige Tumorzelle zur Entstehung einer bösartigen Tumorzelle (Krebszelle) führt. Auslöser dieses Prozesses sind Genveränderungen (Mutationen), die die Wachstums- und Absterbeeigenschaften einer Zelle so verändern, dass diese sich teilt und damit vermehrt, ohne dass dies dem Gesamtorganismus nutzt. Durch die gesteigerte Zellvermehrung und das verminderte Absterben der Zellen entsteht zunächst eine Zellansammlung/Zellhaufen, die/der als gutartiger Tumor bezeichnet wird. Der gutartige Tumor verdrängt das umliegende gesunde Gewebe, ohne es zu zerstören oder darin hineinzuwachsen (nichtinvasives Wachstum). Die gutartigen Tumore können sich zu bösartigen Tumoren entwickeln, indem sie ihren Stoffwechsel verändern, nämlich von Verbrennungsstoffwechsel auf Vergärungsstoffwechsel umschalten, und zwar auch in Anwesenheit von Sauerstoff (aerobe Glykolyse oder Warburg-Effekt). Es sind mehrere Einflüsse bekannt, die diese Umschaltung auslösen: Sauerstoffarmut in größeren oder schlecht durchbluteten Tumoren, Radikalbelastung der Tumorzelle in Folge von chronischen Entzündungen, Chemo- und Strahlentherapien und Anti-Angiogenesewirkstoffe. Die beim Vergärungsstoffwechsel gebildete Milchsäure zerstört das umliegende Gewebe, so dass der Tumor dort hinein wachsen kann (invasives Wachstum), und sie hemmt den Angriff des Immunsystems. Die nun invasiv wachsenden Zellen können sich über das Lymph- und Blutgefäßsystem im ganzen Körper ausbreiten und Fernmetastasen bilden (Streuung). Durch die Abschaltung des Verbrennungsstoffwechsels in den Mitochondrien (oxidative Phosphorylierung) wird die Bildung von Radikalen und die Auslösung von Apoptose unterdrückt, und hierdurch werden diese Krebszellen auch resistent gegenüber Strahlen- und Chemotherapien.

Ein erhöhter Konsum von leicht verdaulichen Kohlenhydraten (insbesondere in Form von Zuckern und Stärke mit hohem glykämischen Index) begünstigt den Übergang von Tumorzellen in Krebszellen und damit einhergehend eine Aktivitätssteigerung des Gens TKTL1 (Transketolase-like-1 Gen). Die TKTL1-Genprodukte bewirken eine sauerstoffunabhängige Energiefreisetzung, die zu keiner Radikalbildung führt und vorhandene oder exogen induzierte Radikale neutralisiert. Gleichzeitig wird die Aktivität der Mitochondrien reduziert und die Apoptose (programmierter Zelltod) wird gehemmt. Nach dem derzeitigen Stand der Wissenschaft ist eine erhöhte Aktivität des TKTL1-Gens ursächlich oder zumindest ein wesentlicher Grund für die Entstehung von aggressiven Krebserkrankungen.

Mit dem Nachweis der Aktivität des TKTL1-Gens in Tumorzellen (z.B. direkt in Tumorzellen oder indirekt durch Nachweis des TKTL1-Proteins in Körperflüssigkeiten oder in Fresszellen/Makrophagen) können Krebspatienten identifiziert werden, denen eine Ernährungstherapie mit Beschränkung der Kohlenhydratmenge und Verwendung von Zuckerformen mit niedrigem glykämischen Index Linderung oder gar Heilung bringen kann, weil das Wachstum von TKTL1-positiven Tumoren und Metastasen infolge der reduzierten Kohlenhydrat- und insbesondere Glukosezufuhr gehemmt wird.

Da oftmals auch die Zuckeraufnahme in Krebszellen mit Hilfe von Insulin erleichtert wird und Insulin zudem eine wachstumsfördernde Wirkung auch auf Krebszellen ausübt, ist es grundsätzlich wünschenswert, nach dem Verzehr einer Mahlzeit nur einen geringen Insulinausstoß zu induzieren.

In der WO 2006/094716 A1 ist beschrieben, dass das Enzyms TKTL1 im aeroben Glukosevergärungsstoffwechsel von Säugerzellen und insbesondere von Säuger-Tumorzellen eine entscheidende Rolle spielt, dass die Aktivität und/oder Konzentration von TKTL1 durch Verabreichung von Thiamin oder Benfotiamine beeinflusst werden kann, und dass eine solche Verabreichung auch in Form von Nahrungsergänzungsmitteln erfolgen kann.

Neben den beschriebenen herkömmlichen Sckokoladenmassen mit Rohrzucker/Saccharose als Zuckerkomponente gibt es noch spezielle Schokoladenmassen, bei denen die Zuckerkomponente ganz oder größtenteils durch Zuckeraustauschstoffe/Zuckerersatzstoffe oder durch Fruktose ersetzt ist.

So werden z.B. in den sogenannten Diabetikerschokoladen anstelle von Saccharose entweder Zuckeralkohole (wie z.B. Polyole) oder Fruktose oder beides eingesetzt. Die Zuckeralkohole und ebenso Fruktose weisen zwar einen niedrigen glykämischen Index auf, doch können sie zu Gesundheitsproblemen führen. Zuckeralkohole können von menschlichen Enzymen nicht vollständig verdaut werden, und werden teilweise über die Darmflora abgebaut, was oft zu Gasbildung und damit einhergehenden Blähungen sowie zu Durchfällen führt. Fruktose hat im Produktionsprozess den Nachteil, dass sie sehr hygroskopisch ist, und die damit zubereitete Schokoladenmasse beim Conchieren nicht über 50°C erhitzt werden darf, weil es andernfalls zur Fruktose-Agglomeratbildung kommt und infolgedessen zu einer sandigen Textur der erzeugten Schokolade.

In der Nahrung des Menschen hat Fruktose gegenüber Glukose vor allem den Nachteil, dass etwa 30-40% der Bevölkerung in der westlichen Welt eine Fruktose-Malabsorption aufweisen. Außerdem wird Fruktose im Unterscheid zu Glukose unreguliert, allein aufgrund ihres Konzentrationsgradienten vom Darm in die Zellen transportiert. Bei hohen Fruktosemengen in der Nahrung können deshalb gesundheitliche Probleme auftreten wie beispielsweise eine osmotische Diarrhoe, Serotoninmangel (infolge chemischer Reaktionen von Fruktose mit Tryptophan im Darm) oder erhöhte Harnsäureproduktion (infolge erhöhter Fruktose-1-Phosphat-Bildung in der Leber).

In jüngst bekannt gemachten sogenannten "zahnfreundlichen Schokoladen" (Internationale Süsswarenmesse ISM 2009, Köln, Halle 10.2, Stand E78) wird das Dissacharid Isomaltulose eingesetzt. Isomaltulose ist ein in Honig und Zuckerrohr vorkommender Zucker, der auch aus Saccharose hergestellt werden kann. Isomaltulose besteht wie Saccharose aus den beiden Monsosacchariden Glukose und Fruktose und weist ein ähnliches, aber reduziertes Süßprofil auf. Aufgrund einer im Vergleich zu Saccharose stabileren Molekülbindung zwischen dem Glukose- und Fruktosemolekül kann Isomaltulose von den Plaque-Bakterien im menschlichen Mund nicht gespalten werden, weshalb dort beim Verzehr von Isomaltulose keine zahnschädigenden Säuren entstehen.

Die DE 102006014543 A1 offenbart die Verwendung von Milchschokolade mit Isomaltulose und einem glykämischen Index von weniger als 50 zur Behandlung und/oder Vorbeugung von malignen Tumorerkrankungen.

Die WO 2010/117344 A1 beschreibt eine Süßungsmittelmischung mit den Komponenten Fructose, Inulin und Erythrol, mit niedrigem Kaloriengehalt und niedrigem glykämischen Index zur Verwendung in diätetischen Schokoladenzusammensetzungen.

Die US 2008/260925 A1 offenbart ein Zuckerersatzmittel, das im Vergleich zu Saccharose einen geringeren Blutzuckeranstieg und geringere gastrointestinale Nebenwirkungen verursacht und einen geringeren Kaloriengehalt aufweist.

Die WO 2007/073187 A1 beschreibt eine Kohlenhydrat-Zusammensetzung mit niedrigem glykämischen Index (unter GI=60) zur Behandlung von Diabetes, Obesitas, Insulinresistenz und zu hohem postprandialem Blutzuckerspiegel. Die Zusammensetzung enthält 5-60 Gew. % Monosaccharide ausgenommen Glucose und Fructose und vorzugsweise Galactose, Ribose und Mannose, 10-75 Gew. % Glucose-haltige Oligosaccharide in denen die Glucose erst nach metabolischem Umbau bioverfügbar ist, und 0-75 Gew % andere Kohlehydrate.

Aufgabe der vorliegenden Erfindung ist deshalb die Bereitstellung einer neuen Schokoladenmasse, insbesondere für die Herstellung von Schokoladenerzeugnissen gemäß Anlage 1 der deutschen Kakaoverordnung vom 15. Dezember 2003 (BGBl. I S. 2738), deren Zuckerkomponente einen relativ geringen glykämischen Index (GI) und eine relativ geringe glykämische Last (GL) aufweist, und die beim Verzehr einen nur relativ niedrigen Insulinausstoß bewirkt, dabei aber in Geschmack und Konsistenz mit den bekannten Schokoladenerzeugnissen vergleichbar ist, und die keine unerwünschten Nebenwirkungen hat, insbesondere keine Verdauungsproblem oder andere gesundheitliche Beeinträchtigungen oder Befindlichkeitsstörungen hervorruft.

Eine Lösung dieser Aufgabe besteht in einer Schokoladenmasse mit einem Gehalt an Kakaomasse und einem Gehalt an zugesetzten Zuckern, die dadurch gekennzeichnet ist, dass die zugesetzten Zucker einen glykämischen Index von jeweils weniger als 35 (GI<35) aufweisen, dass der Gehalt an zugesetzten Zuckern insgesamt und die Schokoladenmasse insgesamt einen glykämischen Index von weniger als 29 (GI<29) aufweisen, dass die zugesetzten Zucker einen Anteil an Galaktose umfassen, der wenigstens 10% des Gehalts an zugesetzten Zuckern insgesamt repräsentiert und der höher ist als ein eventuell vorhandener Anteil an Laktose, dass die zugesetzten Zucker zusätzlich einen Gehalt an Isomaltulose und/oder Tagatose und/oder Trehalose und/oder Ribose umfassen, dass die Schokoladenmasse einen Gehalt an Vitamin E in Form einer Tocotrienol-Tocopherol-Mischung aus natürlichen Quellen (vorzugsweise mit höherem Tocotrienol- als Tocopherol-Anteil) aufweist, und dass in der Schokoladenmasse der Gehalt an Tocotrienolen größer ist als der Gehalt an Tocopherolen.

Die Kombination von Galaktose mit Isomaltulose und/oder Tagatose und/oder Trehalose und/oder Ribose als Zuckerkomponente und die aus natürlichen Quellen stammende Tocotrienol-Tocopherol-Mischung mit höherem Tocotrienol- als Tocopherol-Anteil verleihen der neuen Schokoladenmasse und den daraus bzw. damit hergestellten Schokoladenerzeugnissen die vorteilhafte Eigenschaft, dass sie nach dem Verzehr im menschlichen Stoffwechsel nur einen geringeren Insulinausstoß verursacht und eine hemmende Wirkung auf das Wachstum von Krebsgeschwüren, insbesondere von TKTL1-positiven Krebsgeschwüren entfaltet, ohne dabei zellschädigende Effekte in gesunden Zellen auszulösen.

Das Risiko zur Entwicklung von Diabetes Typ-2, Metabolischem Syndrom und auch Bluthochdruck kann durch den Verzehr von Schokoladenerzeugnissen, die mit der erfindungsgemäßen Schokoladenmasse hergestellt worden sind, gesenkt werden. Gleichzeitig eignet sich die erfindungsgemäße Schokoladenmasse und die daraus hergestellten Schokoladenerzeugnisse als breit einsetzbare Komponente in Ernährungstherapien zur Bekämpfung von Krebsgeschwüren, insbesondere von TKTL1-positiven Tumoren und/oder Metastasen, wobei diese Ernährungstherapien auf dem Prinzip beruhen, dass solche Kohlenhydrate, die im Stoffwechsel leicht und schnell in Glukose überführt werden können, drastisch reduziert sind und gleichzeitig durch die Aufnahme von Tocotrienolen der Vergärungsstoffwechsel in Krebszellen gehemmt wird.

Sofern nicht anders angegeben gelten in der vorliegenden Beschreibung und den Ansprüchen folgende Definitionen:
Schokoladenmasse = Mischung aus Kakaomasse und Zucker(n), die zudem noch Kakaobutter und/oder Milchpulver und/oder andere Zutaten enthalten kann und zur Herstellung eines Schokoladenerzeugnisses gemäß Anlage 1 der deutschen Kakaoverordnung vom 15. Dezember 2003 (BGB1. I S. 2738) geeignet ist.
Kakaomasse = Die von ihrer Schale befreiten und gemahlenen Kakaosamen/Kakaobohnen, die beim Mahlen in Kakaokernbruch (Synonyme: Kakaobruch, "Nibs") und Kakaobutter übergehen, wobei die Kakaobutter die Kakaobruchstücke umhüllt und dadurch eine flüssige Masse bildet.
Zucker = süß schmeckende Mono-, Di- und Trisaccharide wie z.B. Saccharose, Glukose, Laktose, Galaktose, Fruktose, Invertzucker, Isomaltulose, Maltose, Melezitose, Tagatose, Trehalose, Ribose.
Zuckeralkohole (Synonym: Alditole) = nichtzyklische Polyole, die sich strukturell durch Reduktion von Zuckern ableiten, wie z.B. Sorbit, Xylit, Mannit, Maltit, Isomalt, Erythritol.
Gehalt an Tocotrienolen = der Gehalt an alpha- und/oder beta- und/oder gamma- und/oder delta-Tocotrienol.

Sofern nicht anders angegeben, sind alle Verhältnis- und Prozentangaben in der Beschreibung und in den Ansprüchen durchweg gewichtsbezogen, die Temperaturen in Grad Celsius und die Drücke in bar gegenüber Umgebungsdruck angegeben.

Galaktose ist ein Zucker, der als Bestandteil des Milchzuckers (Laktose) ein natürlicher Nahrungsbestandteil des Menschen ist. Neben Glukose und Fruktose gehört Galaktose zu denjenigen Monosacchariden, die vom Menschen am meisten konsumiert und damit dem menschlichen Stoffwechsel am meisten zugeführt werden. Galaktose wird als Baustein von Kohlenhydraten in verschiedenen Schleimhäuten benötigt (anabole Reaktionen) und kann bei Bedarf nach Umbau zu Glukose auch für katabole Reaktionen genutzt werden.

Im Unterschied zu Glukose wird Galaktose im menschlichen Körper insulinunabhängig in die Zellen transportiert. Der glykämische Index (GI) der Galaktose ist mit GI=20 im Vergleich zur Saccharose (GI=65) und Glukose (GI=100) sehr niedrig. Dagegen ist die Süßkraft von Galaktose mindestens halb so groß wie die von Glukose bzw. Saccharose: Bezogen auf Saccharose hat eine 10%-ige D-Galaktoselösung eine Süßkraft von 63 %.

Aufgrund seiner Eignung als kataboles Substrat, d.h. als Energielieferant, ist Galaktose vor allem für solche Patienten von Vorteil, die eine Insulinresistenz haben und bei denen es trotz eines hohen Blutzuckerspiegels zu einer Unterversorgung der Glukose abhängigen Nervenzellen insbesondere des Gehirns kommt - z.B. bei Patienten mit Morbus Alzheimer. Durch Verabreichung von Galaktose bzw. galaktosehaltigen Lebensmitteln kann solchen Patienten auf Insulin-unabhängige Weise Glukose indirekt zugeführt werden (die Galaktose wird Insulin-unabhängig über GluT-3-Transporter in die Nerven- und Hirnzellen geschleust und dort in Glukose umgebaut). Prinzipiell führt auch bei einem gesunden Menschen die Aufnahme von Galaktose wenigstens langfristig zu einer höheren muskulären und kognitiven Leistungsfähigkeit.

Galaktose bewirkt selbst nur eine relativ geringe Insulinausschüttung, und fördert so indirekt, nämlich über den relativ niedrigen Insulinspiegel, die Energieerzeugung mittels Fettverbrennung. Außerdem werden mit dem niedrigen Insulinausstoß Unterzuckerungszustände und dadurch hervorgerufene Heißhungerattacken vermieden. Deshalb eignet sich Galaktose sehr gut als Zuckerkomponente in der Ernährung von Menschen die ihr Gewicht kontrollieren oder Übergewicht reduzieren müssen.

Im Gegensatz zu Glukose und Fruktose kommt Galaktose in der Natur nur in geringen Mengen als Monosaccharid vor. Vom Menschen wird Galaktose herkömmlich fast ausschließlich in Form des Disaccharids Laktose konsumiert. Viele erwachsene Menschen haben jedoch einen Mangel an dem Enzym Laktase, das Laktose spaltet, und leiden deshalb an Laktoseunverträglichkeit. Aus diesem Grund verzichtet die Lebensmittelindustrie immer mehr auf die Verwendung von Laktose in Lebensmitteln. Damit wird jedoch auch der Anteil der Galaktose in der Ernährung des Menschen reduziert.

Obwohl Galaktose in Form des freien Monosaccharids für Menschen mit Laktasemangel verdaulich ist, und obwohl hochreine Galaktose im Stand der Technik zur Verfügung steht, wird das Monosaccharid Galaktose bisher nicht in Schokoladenmassen eingesetzt. Ein Grund hierfür könnte darin liegen, dass Galaktose verdächtigt wird, in der Zelle die Radikalbildung zu fördern und eine Mitochondriendysfunktion auszulösen.

Andererseits haben Untersuchungen des Nobelpreisträgers Otto Heinrich Warburg gezeigt, dass der Vergärungsstoffwechsel von Krebszellen (in Krebsgewebeschnitten) mit Glukose als Nahrungssubstrat am effektivsten abläuft, nämlich mit einer Rate von 23,9 verbrauchte Einheiten pro Zeit, während er mit dem Substrat Fruktose um den Faktor 7 weniger effektiv (Rate 3,3) und mit Galaktose sogar um den Faktor 18 weniger effektiv (Rate 1,3) abläuft. Das bedeutet: Krebszellen, denen nur Galaktose als Nahrungssubstrat zur Verfügung steht, haben einen vergleichsweise drastisch verminderten Vergärungsstoffwechsel und infolgedessen eine entsprechend verminderte Wachstums- und Teilungsrate. Galaktose sollte deshalb in der Ernährung von Krebspatienten eine wesentliche Zuckerquelle sein.

Eine etwaige zellschädigende Wirkung des Monosaccharids Galaktose wird durch die kombinierte gleichzeitige Aufnahme von Vitamin E in Form einer Tocotrienol-Tocopherol-Mischung aus natürlichen Quellen und von Isomaltulose und/oder Tagatose verhindert oder kompensiert.

Vitamin E in Form des alpha-Tocopherols und ebenso Isomaltulose, oder richtiger die in diesem Disaccharid enthaltene Fruktose, sowie Tagatose sind im Stand der Technik dafür bekannt, dass sie sehr effektiv die Bildung von reaktiven Sauerstoffspezies, sogenannten Sauerstoffradikalen (englisch: Reactive Oxygen Species = "ROS"), unterdrücken oder entstehende Sauerstoffradikale/ROS neutralisieren (Free Radic Biol Med. 1997;22(1-2):257-268: Fructose and tagatose protect against oxidative cell injury by iron chelation; Diabetes. 1996 Sep;45(9):1233-7. Abnormalities of retinal metabolism in diabetes or experimental galactosemia. III. Effects of antioxidants; Free Radic Res. 2000 Jan;32(1):67-74. Diabetes-induced metabolic abnormalities in myocardium: effect of antioxidant therapy.)

Die Tocotrienol-Tocopherol-Mischung hat außerdem den Vorteil, dass ihre Tocotrienole, insbesondere das Gamma-Tocotrienol und das Delta-Tocotrienol jüngeren Forschungsergebnissen zufolge bei verschiedenen Krebsarten als Inhibitor der Zellproliferation und als Auslöser der Apoptose wirken und damit eine direkte Anti-Krebswirkung aufweisen (z.B. Pharmacology. 2010;85(4):248-58; BMC Cancer. 2010 Mar 8;10:84; Breast Cancer Res Treat. 2010 Feb 16).

Als Quelle für die Tocotrienol-Tocopherol-Mischung kommen insbesondere Palmöl und Reiskleie oder Tocopherol-Tocotrienol-Extrakte aus Palmöl und Reiskleie in Betracht.

Isomaltulose hat neben seiner ROS-neutralisierenden Wirkung außerdem die vorteilhafte Eigenschaft, dass sie einerseits wie Saccharose ein Disaccharid aus Glukose und Fruktose ist, im Unterschied zu Saccharose aber nur einen glykämischen Index von GI=32 aufweist, weil die menschlichen Disaccharidasen im Dünndarm dieses Disaccharid langsamer spalten als das Saccharose-Disaccharid und die langsame Spaltung einem schnellen Blutglukose- und Insulinanstieg entgegen wirkt. Durch die verminderte Insulinaussschüttung kommt es zu einer erhöhten Fettverbrennung und einer erhöhten Aktivität der Mitochondrien. Da Isomaltulose auch von den Plaquebakterien im Mund schlecht verdaut wird, gehört Isomaltulose zu den nicht kariogenen Zuckerformen. Die Kombination von Isomaltulose mit Galaktose, die ebenfalls zahnfreundlicher ist als Saccharose, verleiht der erfindungsgemäßen Schokoladenmasse den weiteren Vorteil, dass sie auch für Kinder und Jugendliche besonders geeignet ist, weil diese einerseits süße Schokolade bevorzugen und andererseits ihre teilweise noch im Aufbau befindlichen Zähne gerade in dieser Entwicklungsphase vor Karies schützen sollten.

Tagatose ist ein natürlich vorkommendes Monosaccharid, das auch aus Galaktose mittels Isomerisierung hergestellt werden kann. Tagatose hat einen niedrigen glykämischen Index von GI = 3 und eine Süßkraft von etwa 97 % bezogen auf Saccharose, weist dabei aber einen deutlich geringeren Energieinhalt als Saccharose auf, weil es nur zu etwa 20% direkt vom menschlichen Körper verdaut wird. Die restlichen 80% der Tagatose werden von der Darmflora abgebaut, wobei unter anderem Butyrat gebildet wird, das eine hemmende Wirkung auf das Wachstums von Krebszellen hat, in Krebszellen Apoptose auslösen kann und den Zuckerstoffwechsel in Krebszellen steuert (Int J Cancer. 2010 Aug 16. Butyrate elicits a metabolic switch in human colon cancer cells by targeting the pyruvate dehydrogenase complex.)

Trehalose ist ein natürlicher zahnfreundlicher Zweifach-Zucker aus zwei Glukose-Molekülen (alpha 1-1 Bindung). Seine Süßkraft beträgt ca. 50% der Süßkraft von Saccharose. Der glykämische Index von Trehalose ist etwa so groß wie der von Isomaltulose (GI = 32). Genau wie Isomaltulose wird Trehalose erst im menschlichen Dünndarm abgebaut und bewirkt einen niedrigen Insulinausstoß. Trehalose ist ein nicht-reduzierender Zucker und reagiert infolgedessen nicht mit freien Aminogruppen von Aminosäuren, wodurch die Trehalose enthaltenden Lebensmittel stabiler sind. Da Trehalose auch beim Erhitzen aufgrund seiner nichtreduzierenden Eigenschaften nicht mit anderen Lebensmittelbestandteilen reagiert, werden sowohl diese anderen Lebensmittel-Inhaltsstoffe als auch Trehalose selbst nicht chemisch modifiziert und stehen damit in unveränderter biologisch wirksamer Form zur Verfügung. Trehalose eignet sich unter anderem besonders gut als Überzug (Coat), da er wenig hygroskopisch ist und somit eine Schutzfunktion an der Oberfläche ausübt. Da beim Abbau von Trehalose nur Glukose freigesetzt wird, kann Trehalose auch bei Fruktose-Unverträglichkeit als Süßungsmittel eingesetzt werden. Trehalose verleiht Lebensmitteln ein angenehmes Mundgefühl. Zudem unterdrückt Trehalose Geschmacksnoten, die von vielen Menschen als eher unangenehm empfunden werden wie z.B. leicht bitteren Geschmack. Damit geht der Vorteil einher, dass Trehalose-haltigen Schokomassen gesundheitsfördernde, aber wenig angenehm schmeckende Inhaltsstoffe wie sekundäre Pflanzenstoffe und Tocotrienole dennoch in höherer Konzentration zugegeben werden können.

Ribose kommt in allen pflanzlichen und tierischen Zellen vor. Im tierischen Körper wird D-Ribose unter anderem zur Bildung von Adenosintriphosphat (ATP), dem wichtigsten Energielieferant des Stoffwechsels genutzt. In Sportlerkreisen wird D-Ribose als Nahrungsergänzung eingesetzt, um das bei der Muskeltätigkeit verbrauchte ATP schneller nachzuproduzieren und damit die Regenerationsphase zwischen Trainingseinheiten zu verkürzen. D-Ribose wird wie Galaktose völlig anders verstoffwechselt als Saccharose und ihre Einnahme bewirkt keinen Anstieg sondern vielmehr eine Absinkung des Blutzuckerspiegel. Ribose besitzt damit sogar einen negativen glykämischen Index, weil nach dem Konsum von Ribose der Blutzuckerspiegel gesenkt wird. Dies kann ausgenutzt werden, um den glykämischen Index der Schokoladenmasse zu senken. Die Süßkraft von Ribose beträgt ca. 30% der Süßkraft von Saccharose.

Zusätzlich zu den genannten Zuckern können ein oder mehrere Zuckeralkohole, insbesondere Maltit und/ oder Isomalt und/oder Erythritol eingesetzt werden. Dabei sollte der Gehalt an Zuckeralkoholen geringer sein als der Gehalt an solchen Zuckern, die vollständig durch menschliche Enzyme verdaulich sind. Die Zuckeralkohole haben den Vorteil, dass sie eine hohe Süßkraft haben (Isomalt mit gleicher Süßkraft wie Saccharose, aber doppelter Süßkraft wie Isomaltulose), nicht kariogen sind, nicht den Blutzuckerspiegel erhöhen und keine oder äußerst geringe Insulinaussschüttung auslösen. Zudem regen sie die Darmtätigkeit an und wirken so einer Darmträgheit entgegen. Erythritol beispielsweise ist ein natürlich fermentierter und zahnfreundlicher Zuckeraustauschstoff, mit einer Süßkraft von 50% bis 60% bezogen auf die Süßkraft von Sacharose. Erythritol wird im meschlichen Dünndarm komplett aufgenommen und unverändert über die Niere wieder ausgeschieden, weshalb sein Kalorienwert und glykämischer Index gleich 0 ist. Durch die Ausscheidung von Erythritol über die Niere ist im Gegensatz zu anderen Zuckeralkoholen die laxative Wirkung wesentlich geringer. Damit kann eine höhere Menge Erythritol eingenommen werden als es bei anderen Zuckeralkohole der Fall ist. Die beim Schmelzen von Erythritol erzeugte Kälte kann in der Schokoladenmasse zu einer Reduktion des Schmelzens ausgenutzt werden. In Kombination mit z.B. Pfefferminzöl kann damit auch ein Schokoprodukt mit angenehmem Kühleffekt im Mund erzeugt werden.

In einer anderen Variante werden die Zucker oder die Kombination aus Zuckern und Zuckeralkoholen mit Stevia kombiniert. Stevia (Synonyme: Süßkraut, Süßblatt und Honigkraut) ist die allgemein übliche Kurzbezeichnung für Stevia rebaudiana bertoni (Gattung: Stevien, Familie: Korbblütler). Die Blätter dieser Pflanze enthalten das Diterpenglykosid Steviosid, das die bis zu 300-fache Süßkraft von Zucker hat, die Zähne vor Karies schützt und den Insulinsspiegel nicht beeinflusst. Zur Süßung werden die getrockneten Blätter oder die industriell gewonnenen Süß-Extrakte verwendet.

Die erfindungsgemäße Schokoladenmasse kann außerdem zusätzlich einen Gehalt an nicht verdaulichen Mehrfachzuckern, insbesondere Inulin oder Oligofruktose und/oder sogenannter resistenter Stärke (z.B. Dextrine) aufweisen, die die Sensorik und den Geschmack verbessern und dabei gleichzeitig das Wachstums von erwünschten Darmbakterien fördern (probiotische Wirkung).

In einer weiteren Ausführungsvariante weist die Schokoladenmasse zusätzlich einen Gehalt an Omega-3-Fettsäuren und/oder mittelkettigen Triglyceriden ("MCT") auf, womit ihre gesundheitsfördernde Wirkung noch gesteigert wird.

MCT fördern die Bereitstellung von Ketonkörpern und von freien mittelkettigen Fettsäuren, die beide eine wichtige Rolle im Energiestoffwechsel haben, insbesondere als alternative Energiequelle zu Blutzucker einerseits bei Krebspatienten mit erhöhter Aktivität des TKTL1-Gens im Energiestoffwechsel des gesunden Gewebes und andererseits bei Menschen mit Insulinresistenz im Energiestoffwechsel vor allem der Nervenzellen des Gehirns (aufgrund ihrer Passagemöglichkeit der Blut-Hirn-Schranke). Die Omega-3-Fettsäuren liegen vorzugsweise in Form von Ölsaaten/Ölsamen vor. Unter "Ölsaaten"/"Ölsamen" werden Pflanzensamen bezeichnet, die zur Gewinnung von Pflanzenöl genutzt werden können. Zu den Ölsaaten/Ölsamen zählen u.a. Soja, Raps, Hanf, Flachs, Walnuss. Die Samen können im Ganzen oder als Ölschrot eingesetzt werden. "Ölschrot" bezeichnet die bei der Verarbeitung von Ölsaaten und Ölfrüchten neben dem Öl gewonnenen Koppelprodukte. Je nach Verarbeitungsverfahren wird Ölschrot auch Presskuchen (bei Heiß- oder Kaltpressung der Ölsaaten) oder Extraktionsschrot (bei Ölextraktion durch Lösungsmittel) genannt. Ölsaaten zeichnen sich durch einen hohen Gehalt an essentiellen ungesättigten Fettsäuren und essentiellen Aminosäuren aus und enthalten darüber hinaus auch Mineralien wie Magnesium, Selen oder Zink. Für einige Ölsaaten ist eine direkte Anti-Krebs-Wirkung beschrieben worden, und deshalb werden solche Ölsaaten oder auch die entsprechenden Öle bevorzugt eingesetzt.

Mittelkettige Triglyceride sind erfindungsgemäß Triglyceride mit einer bevorzugten Kettenlänge von C8 und/oder C10.

Die Schokoladenmasse kann ferner einen zusätzlichen Gehalt an sekundären Pflanzenstoffen ("SPS") aufweisen und vorzugsweise eines oder mehrere Mitglieder der folgenden Gruppe enthalten: Glucosinolate, Carotinoide, Lektine, Flavonoide, Phytosterine, Polyphenolen, insbesondere Curcumin, Ellagsäure, Quercetin, Resveratrol, Delphinidin, Diallylsulfid, Epigallocatechin-3-gallat, Genistein, Indol-3-carbinol, Isoterpene, Limonin, Lycopin, OPC, Salvestrole, Sulforaphan.

Sekundäre Pflanzenstoffe besitzen neueren Erkenntnissen zufolge eine bedeutende Wirksamkeit, insbesondere bei chronischen Entzündungen und Mitochondrienschädigungen sowie bei onkologischen Erkrankungen. Um diese Wirkung zu erzielen, sollten die sekundären Pflanzenstoffe nicht isoliert oder naturidentisch verabreicht oder einem Nahrungsmittel zugesetzt werden, sondern sie sollten in Form ihrer natürlichen Quelle wie Samen, Früchte, Kern- oder Samenmehle aufgenommen bzw. dem Nahrungsmittel zugesetzt werden.

In einer bevorzugten Ausführungsform weist die Schokoladenmasse zusätzlich einen Gehalt an Vitamin B1 in Form des Thiaminderivats Benfotiamin auf. Benfotiamin ist im Gegensatz zu dem wasserlöslichen Thiamin fettlöslich und deshalb in der fetthaltigen Schokoladenmasse als Vitamin-B1-Quelle besser geeignet. Des Weiteren ist Benfotiamin in der Lage die ROS-Bildung in Zellen zu unterdrücken und wirkt damit einer möglichen ROS-Bildung durch Galaktose entgegen (Diabetes Metab Res Rev. 2008 Jul-Aug;24(5):371-7 - Benfotiamine exhibits direct antioxidative capacity and prevents induction of DNA damage in vitro). Darüber hinaus hat Benfotiamin eine deutlich bessere biologische Wirksamkeit als Thiamin und bewirkt, dass der Ab- und Umbau der in der Schokolade enthaltenen Zuckern beschleunigt wird und damit die negativen Effekte von Zuckern (advanced glucose endproducts = AGE), insbesondere die chronischen Diabetesschäden, reduziert oder vermieden werden.

Die Schokoladenmasse kann außerdem einen zusätzlichen Gehalt an CO₂-extrahierten Kernölen (z.B. Himbeerkern-, Kiwikernöl, Hagebuttenkernöl) aufweisen, die reich an Omega-3-Fettsäuren sind und gleichzeitig einen hohen Anteil an wertvollen sekundären Pflanzenstoffen aufweisen. CO₂-Extrakte weisen im Gegensatz zu den mit klassischen Ölmühlen erzeugten Ölen keine Metallpartikel aus dem mechanischen Abrieb der Ölmühlen auf.

Die Schokoladenmasse kann ferner einen zusätzlichen Gehalt an Vitamin D aufweisen, um einem Vitamin-D-Mangel vorzubeugen oder entgegen zu wirken, denn Vitamin D-Mangel fördert Insulinresistenz und Metabolisches Syndrom, und um die bekannte starke Anti-Krebswirkung von Vitamin D zu nutzen.

Um die mitochondriale Energieproduktion und Fettverbrennung zu erhöhen und gleichzeitig die unerwünschte Vergärung in Krebszellen zu hemmen, kann die Schokoladenmasse zusätzlich einen Gehalt an Carnitin und/oder Kreatin aufweisen.

Mit der erfindungsgemäßen Schokoladenmasse lassen sich im Prinzip alle marktüblichen Schokoladenerzeugnisse herstellen und insbesondere solche gemäß Anlage 1 Nr. 3 bis 10 und 2 (c) und 2 (d) der Kakaoverordnung vom 15. Dezember 2003 (BGB1. I S. 2738), zuletzt geändert durch Artikel 2 der Verordnung vom 30. September 2008 (BGB1. I S. 1911).

Im Fall von Schokoladenerzeugnissen, die gemäß ursprünglicher Rezeptur unter Verwendung von Getreidemehl und/oder Stärke hergestellt werden, zum Beispiel solche gemäß Anlage 1 Nr. 7, 8 und 9 der Kakaoverordnung, sollten glutenfreie Mehle eingesetzt werden, beispielsweise Kokosnussmehl, Mandelmehl, Kürbiskernmehl, Traubenkernmehl, Granatapfelkernmehl, Maismehl, Reismehl, Leinsamenmehl, Canihuamehl, Sorghummehl. Diese glutenfreien Mehle werden dabei so gemischt, dass die für ein Extrudat notwendige und hinreichende Stärkemenge erhalten wird und gleichzeitig ein hoher Eiweiß- und Ballaststoffanteil erreicht wird. Der Gehalt an Kohlenhydraten sollte höchstens 40% Gewicht/Gewicht betragen und mindestens 20% Gewicht/Gewicht amylosehaltige Stärke umfassen, und der Gehalt an Eiweiß sollte mindestens 30% Gewicht/Gewicht betragen. Die eingesetzten Mehle sollten darüber hinaus noch wertvolle sekundäre Pflanzenstoffe enthalten. Die sekundären Pflanzenstoffe, insbesondere Polyphenole (z.B. aus Granatapfelkern- oder Traubenkemmehl) unterstützen die ROS-unterdrückende Wirkung der Tocopherol-Tocotrienol-Mischung. Gleichzeitig wird durch die sekundären Pflanzenstoffe in den Extrudaten eine hemmende Wirkung auf den unerwünschten Vergärungsstoffwechsel in Krebszellen ausgeübt (Proteomics 2008, 8, 45-61 Transcriptome and proteome profiling of colon mucosa from quercetin fed F344 rats point to tumor preventive mechanisms, increased mitochondrial fatty acid degradation and decreased glycolysis). Durch die in den Extrudaten enthaltene hohe Menge an Eiweiß und Ballaststoffen kann ein Schokoladenerzeugnis generiert werden, das gegenüber herkömmlichen Schokoladenerzeugnissen einen höheren Eiweiß und/oder Ballaststoffanteil aufweist, ohne dass das Geschmacksempfinden beeinträchtigt wird. Die höhere Menge an Eiweiß- und Ballaststoffen vermindert darüber hinaus auch noch die Schnelligkeit des Verdaus der in dem Schokoladenerzeugnis enthaltenen Zucker und vermindert so den Blutglukoseanstieg und den Ausstoß von Insulin.

Die erfindungsgemäße Schokoladenmasse, insbesondere in Form der daraus hergestellten Schokoladenerzeugnisse, eignet sich erfindungsgemäß sehr gut als Nahrungsmittel oder Nahrungsergänzungsmittel in der präventiven oder therapeutischen Behandlung von Krankheiten aus der Gruppe umfassend: Zöliakie, Diabetes mellitus Typ-2, neurodegenerative Krankheiten, insbesondere Alzheimer, Tumorerkrankungen, sowie Erkrankungen, die zu einer Kachexie (Auszehrung) führen, die mit entzündlichen Prozessen einhergehen oder davon verursacht werden, insbesondere Rheuma, rheumatoide Arthritis, entzündliche Darmerkrankungen wie Ulzerative Colitis, Morbus Crohn, Darmerkrankungen wie das Leaky-Gut-Syndrom (durchlässiger Darm).

Mit der erfindungsgemäßen Schokoladenmasse oder dem erfindungsgemäßen Schokoladenerzeugnis kann eine therapeutische oder präventive Behandlung von Personen erfolgen, die entweder von einer genannten Erkrankungen betroffen sind, oder aber die - entweder genetisch oder ernährungstechnisch bedingt - das Risiko tragen, solche Krankheiten zu entwickeln.

Die Zusammensetzung der erfindungsgemäßen Schokoladenmasse basiert vorzugsweise ganz auf natürlichen Inhaltsstoffen, was neben den oben erwähnten Eigenschaften auch zur besseren Verträglichkeit und Akzeptanz in den angesprochenen Verkehrskreisen führt.

Im Folgenden wird die erfindungsgemäße Schokoladenmasse anhand von Rezeptur-Beispielen näher erläutert.

Hierbei gelten folgende Begriffsdefinitionen:
"Lebensmittelextrudat" = herkömmliches Getreideextrudat oder anderes Lebensmittelextrudat (z.B. eiweiß- und ballaststoffreiches, glutenfreies Extrudat, mit hohem Anteil an sekundären Pflanzenstoffen).
"Flakes" = Getreideextrudate, die mit üblichen standardisierten Verfahren herstellbar sind.
"Nuss" = Frucht mit harter holziger Schale, die einen ölhaltigen, essbaren Kern umschließt.
"Kern" = der feste innere Teil einer Frucht.

### Beispiel 1: Schokoladenmasse und daraus hergestellte Schoko-Snacks

### Zutaten:

### (A) Schokoladenmasse:

| | |
|---|---|
| Kakaomasse | 39,2 % |
| Kakaobutter | 13,7 % |
| Galaktose | 13 % |
| Isomaltulose | 34 % |
| Tocotrienol-Tocopherol-Mischung | 0,1 % |

### (B) Schoko-Snacks:

| | |
|---|---|
| Schokoladenmasse gemäß (A) | 83 % |
| Lebensmittelextrudat, z.B. Sojaflakes | 7 % |
| (eiweiß- und ballaststoffreich, mit Granatapfelkernmehl und Traubenkernmehl) | |
| Sojalecithin | 0,8% |
| Inulin | 8,2% |
| CO2-extrahiertes Himbeerkernöl (reich an Omega-3-Fettsäuren) | 1% |

Vorzugsweise wird ein Getreideextrudat oder Lebensmittelextrudat verwendet, das einen Gehalt an Kohlenhydraten von höchstens 40% Gewicht/Gewicht aufweist, wobei der Gehalt an Kohlenhydraten in Form von amylosehaltiger Stärke mindestens 20% Gewicht/Gewicht beträgt, das einen Gehalt an Eiweiß von mindestens 30% Gewicht/Gewicht aufweist, und das glutenfrei ist.

Anstelle von Inulin kann auch ein anderer präbiotischer Ballaststoff oder eine Kombination mehrerer solcher Ballaststoffe eingesetzt werden.

### Beispiel 2: Variationen der Schoko-Snacks nach Beispiel 1

Die Zutaten gemäß (A) und (B) in Beispiel 1 werden beliebig kombiniert mit Nüssen und/oder Ölsamen und/oder frischen oder getrockneten Früchten.

Die Nüsse, Ölsamen und Früchte sollten im Gesamtprodukt einen niedrigen Kohlenhydratanteil aufweisen und zudem natürlicherweise Sekundäre Pflanzenstoffe, Omega-3-Fettsäuren, krebsprotektive oder gesundheitsförderliche Stoffe beinhalten.

Bevorzugte Kombinationen aus Nüssen und/oder Ölsamen und/oder frischen oder getrockneten Früchten sind:
a) Cranberry + Pistazie
b) CO₂-Extrakt aus Ingwer + Orangenschalenextrakt
c) Walnuss + geröstete Leinsamen
wobei der Anteil von (a), (b) oder (c) an dem Schoko-Snack jeweils 5% beträgt.

### Beispiel 3: Schokoladenmasse und daraus hergestellte Schoko-Crips mit Cranberry und Pistazien

### Zutaten:

### (A) Schokoladenmasse:

| | |
|---|---|
| Kakaomasse | 39,2 % |
| Kakaobutter | 13,7 % |
| Isomaltulose | 35,8 % |
| Galaktose | 11,3 % |
| Tocotrienol-Tocopherol-Mischung | 0,01 % |

### (B) Schoko-Crips:

| | |
|---|---|
| Schokoladenmasse gemäß (A) | 83,8 % |
| Inulin (=Ballaststoff aus der Chicorée-Wurzel) | 7,95 % |
| Lebensmittelextrudate in Cripsform | 2,5 % |
| Pistazien | 2,5 % |
| Cranberry | 2,5 % |
| Sojalecithin (als Emulgator) | 0,75% |

Anstelle der Pistazien können auch andere Fruchtsamen, insbesondere Nüsse oder Ölsamen wie z.B. Mandeln, Kürbiskerne, Gratapfelkerne, Leinsamen, Walnüsse, Macadamianüsse und Pinienkerne verwendet werden.

Anstelle der Cranberries können ebenso gut auch andere Trockenfrüchte (z.B. Aprikose, Mango, Pfirsisch, Apfel, Pflaume, Kirsch, Orange, Banane), insbesondere Trockenbeeren (z.B. Aronia, Heidelbeere, Himbeere, Schwarze Johannisbeere, Erdbeerstücke) verwendet werden.

Die Nüsse, Fruchtsamen und Trockenfrüchte sollten im Gesamtprodukt einen niedrigen Kohlenhydratanteil aufweisen.

### Beispiel 4: Schokoladenmasse und daraus hergestellter Schoko-Aufstrich

### Zutaten:

### (A) Schokoladenmasse:

| | |
|---|---|
| Kakaomasse | 54,85 % |
| Kakaobutter | 10 % |
| Galaktose | 20 % |
| Isomaltulose | 10 % |
| Tagatose | 5 % |
| Tocotrienol-Tocopherol-Mischung | 0,15 % |

### (B) Schoko-Aufstrich

| | |
|---|---|
| Schokoladenmasse gemäß (A) | 30 % |
| Mandelmasse | 40 % |
| MCT | 10 % |
| Omega-3-Fettsäure-Quelle (z.B. Leinöl) | 20 % |

Als Omega-3-Fettsäure-Quelle kommen insbesondere Leinöl, Hanföl, Walnussöl, Leindotteröl, Himbeerkernöl, Hagebuttenkernöl, Kiwikernöl in Betracht.

### Beispiel 5: Schokoladenmasse und damit überzogene geröstete Mandeln

### Zutaten:

### (A) Schokoladenmasse:

| | |
|---|---|
| Kakaomasse | 32 % |
| Kakaobutter | 15 % |
| Galaktose | 9,92 % |
| Isomaltulose | 28 % |
| Tagatose | 15 % |
| Tocotrienol-Tocopherol-Mischung | 0,08 % |

### (B) Schoko-Mandeln:

Schokoladenmasse gemäß (A)
Geröstete Mandeln

### Beispiel 6: Schokoladenmasse und damit überzogene Getreidextrudatkugeln

### Zutaten:

### (A) Schokoladenmasse:

| | |
|---|---|
| Kakaomasse | 52 % |
| Kakaobutter | 15,95 % |
| Galaktose | 15 % |
| Isomaltulose | 10 % |
| Tagatose | 7 % |
| Tocotrienol-Tocopherol-Mischung | 0,05 % |

### (B) Schoko-Extrudatkugeln:

| | |
|---|---|
| Schokoladenmasse gemäß (A) | 20 % |
| Lebensmittelextrudate in Kugelform | 78 % |
| Gummi Arabicum-Überzug | 2 % |

### Beispiel 7: "Schoko-Nuss-Creme"

### Zutaten:

### (A) Schokoladenmasse:

| | |
|---|---|
| Kakaomasse | 25 % |
| Kakaobutter | 5 % |
| Galaktose | 49,7 % |
| Tagatose | 20 % |
| Tocotrienot-Tocopherol-Mischung | 0,3 % |

### (B) Schoko-Aufstrich

| | |
|---|---|
| Schokoladenmasse gemäß (A) | 40 % |
| Mandelmasse | 40 % |
| Kokosöl | 20 % |

### Beispiel 8: "One Shot Omega" - flüssige Schokoladenmasse zum Trinken

### Zutaten:

| | |
|---|---|
| Kakaomasse | 20 % |
| Kakaobutter | 2 % |
| Galaktose | 5 % |
| Isomaltulose | 4 % |
| Tagatose | 3 % |
| Tocotrienol-Tocopherol-Mischung | 1 % |
| Sojalecithin | 0,8 % |
| Leinöl | 20 % |
| Walnussöl | 3,2 % |
| Himbeerkernöl | 12 % |
| DHA-Öl aus Algen | 10 % |
| Traubenkernöl | 9 % |
| MCT | 10 % |

### Beispiel 9: "Schokomasse enthaltende Milch" - Milchmischgetränk

### Zutaten:

| | |
|---|---|
| Kakaomasse | 6 % |
| Galaktose | 4 % |
| Isomaltulose | 2 % |
| Tagatose | 3 % |
| Tocotrienol-Tocopherol-Mischung | 0,1 % |
| Sojalecithin | 0,3 % |
| Verdickungsmittel Carrageen | 0,5 % |
| Himbeerkernöl | 0,5 % |
| DHA-Öl aus Algen | 0,5 % |
| MCT | 1 % |
| Milch 3,5% Fettanteil | 82,1 % |
| Aroma Vanillin | 0,001 % |

### Beispiel 10: Schokoladenmasse und daraus hergestellte eiweißreiche Crispy-Schokoriegel mit Aroniabeeren

### Zutaten:

### (A) Schokoladenmasse:

| | |
|---|---|
| Kakaomasse | 27 % |
| Kakaobutter | 2,9 % |
| Galaktose | 9 % |
| Isomaltulose | 8 % |
| Tagatose | 7 % |
| Tocotrienol-Tocopherol-Mischung | 0,1 % |
| Lupinenprotein | 38 % |
| Crisps | 4 % |
| Aroniabeeren | 4 % |

### Beispiel 11: Schokoladenmasse und daraus hergestellte Schoko-Snacks Geschmacksrichtung "Kokos"

### Zutaten:

### (A) Schokoladenmasse:

| | |
|---|---|
| Kakaomasse | 39,2 % |
| Kakaobutter | 13,7 % |
| Galaktose | 13 % |
| Trehalose | 8 % |
| Isomaltulose | 21 % |
| Erythritol | 5 % |
| Tocotrienol-Tocopherol-Mischung | 0,1 % |

### (B) Schoko-Snacks:

| | |
|---|---|
| Schokoladenmasse gemäß (A) | 83 % |
| Kokosraspeln | 8 % |
| Sojalecithin | 0,8 % |
| Inulin | 8,2 % |

### Beispiel 12: Schokoladenmasse und daraus hergestellte Schoko-Snacks Geschmacksrichtung "Pfefferminz"

### Zutaten:

### (A) Schokoladenmasse:

| | |
|---|---|
| Kakaomasse | 39,2 % |
| Kakaobutter | 13,7 % |
| Galaktose | 22 % |
| Isomaltulose | 20 % |
| Erythritol | 5 % |
| Tocotrienol-Tocopherol-Mischung | 0,1 % |

### (B) Schoko-Snacks:

| | |
|---|---|
| Schokoladenmasse gemäß (A) | 90,5 % |
| Sojalecithin | 0,8 % |
| Inulin | 8,2 % |
| CO2-extrahiertes Pfefferminzöl | 0,5 % |

### Beispiel 13: Schokoladenmasse und daraus hergestellte Schoko-Snacks Geschmacksrichtung "Zimt"

### Zutaten:

### (A) Schokoladenmasse:

| | |
|---|---|
| Kakaomasse | 39,2 % |
| Kakaobutter | 13,7 % |
| Galaktose | 22 % |
| Trehalose | 8 % |
| Isomaltulose | 17 % |
| Tocotrienol-Tocopherol-Mischung | 0,1 % |

### (B) Schoko-Snacks:

| | |
|---|---|
| Schokoladenmasse gemäß (A) | 90,5 % |
| Sojalecithin | 0,8 % |
| Inulin | 8,2 % |
| CO2-extrahiertes Zimtöl | 0,5 % |

### Beispiel 14: Schokoladenmasse und daraus hergestellte Schoko-Snacks Regeneration nach Sport Geschmacksrichtung "Zimt"

### Zutaten:

### (A) Schokoladenmasse:

| | |
|---|---|
| Kakaomasse | 39,2 % |
| Kakaobutter | 13,7 % |
| Galaktose | 22 % |
| Trehalose | 8 % |
| Isomaltulose | 14 % |
| Ribose | 3 % |
| Tocotrienol-Tocopherol-Mischung | 0,1 % |

### (B) Schoko-Snacks:

| | |
|---|---|
| Schokoladenmasse gemäß (A) | 93 % |
| Sojalecithin | 0,8 % |
| Inulin | 0,2 % |
| Kreatin | 3 % |
| Carnithin | 2,3 % |
| Benfotiamin | 0,2 % |
| CO2-extrahiertes Zimtöl | 0,5 % |

### Beispiel 15: Schokoladenmasse und daraus hergestellte Schoko-Snacks zur Regeneration und Biogenese der Mitochondrien Geschmacksrichtung "Zitrone"

### Zutaten:

### (A) Schokoladenmasse:

| | |
|---|---|
| Kakaomasse | 39,2 % |
| Kakaobutter | 13,7 % |
| Galaktose | 22 % |
| Trehalose | 8 % |
| Isomaltulose | 14 % |
| Ribose | 3 % |
| Tocotrienol-Tocopherol-Mischung | 0,1 % |

### (B) Schoko-Snacks:

| | |
|---|---|
| Schokoladenmasse gemäß (A) | 91 % |
| Sojalecithin | 0,8 % |
| Inulin | 0,2 % |
| Kreatin | 3 % |
| Carnithin | 2,3 % |
| Benfotiamin | 0,2 % |
| Mehl (aus Blattspitzen von Kohlsorte reich an Quercetin) | 2 % |
| CO2-extrahiertes Zitronenöl | 0,5 % |

## Patentansprüche

1. Schokoladenmasse mit einem Gehalt an Kakaomasse und einem Gehalt an zugesetzten Zuckern, **dadurch gekennzeichnet, dass** die zugesetzten Zucker einen glykämischen Index von jeweils weniger als 35 (GI<35) aufweisen, dass der Gehalt an zugesetzten Zuckern insgesamt und die Schokoladenmasse insgesamt einen glykämischen Index von weniger als 29 (GI<29) aufweisen, dass die zugesetzten Zucker einen Anteil an Galaktose umfassen, der wenigstens 10% des Gehalts an zugesetzten Zuckern insgesamt repräsentiert und der höher ist als ein eventuell vorhandener Anteil an Laktose, dass die zugesetzten Zucker zusätzlich einen Gehalt an Isomaltulose und/oder Tagatose und/oder Trehalose und/oder Ribose umfassen, dass die Schokoladenmasse einen Gehalt an Vitamin E in Form einer Tocotrienol-Tocopherol-Mischung aus natürlichen Quellen aufweist, und dass in der Schokoladenmasse der Gehalt an Tocotrienolen größer ist als der Gehalt an Tocopherolen.

2. Schokoladenmasse nach Anspruch 1, **dadurch gekennzeichnet, dass** sie zusätzlich ein Gehalt an Zuckeralkoholen, insbesondere Isomalt und/oder Maltit und/oder Erythritol, aufweist, wobei der Gehalt an Zuckeralkoholen geringer ist als der Gehalt an Zuckern, die vollständig durch menschliche Enzyme verdaulich sind.

3. Schokoladenmasse nach Anspruch 1 oder 2, **dadurch gekennzeichnet, dass** sie zusätzlich einen Gehalt an Stevia aufweist.

4. Schokoladenmasse nach einem der Ansprüche 1 bis 3, **dadurch gekennzeichnet, dass** sie zusätzlich einen Gehalt an nicht verdaulichen Mehrfachzuckern, insbesondere Inulin oder Oligofruktose oder resistente Stärke aufweist.

5. Schokoladenmasse nach einem der Ansprüche 1 bis 4, **dadurch gekennzeichnet, dass** sie zusätzlich einen Gehalt an Omega-3-Fettsäuren und/oder mittelkettigen Triglyceriden ("MCT") aufweist

6. Schokoladenmasse nach einem der Ansprüche 1 bis 5, **dadurch gekennzeichnet, dass** sie zusätzlich eine Gehalt an sekundären Pflanzenstoffen aufweist, die ausgewählt sind aus der Gruppe umfassend: Glucosinolate, Carotinoide, Lektine, Flavonoide, Phytosterine, Polyphenolen, insbesondere Curcumin, Ellagsäure, Quercetin, Resveratrol, Delphinidin, Diallylsulfid, Epigallocatechin-3-gallat, Genistein, Indol-3-carbinol, Isoterpene, Limonin, Lycopin, OPC, Salvestrole, Sulforaphan und Ubichinon, und die über natürliche Quellen wie Samen, Früchte und Kern- oder Samenmehle zugegeben werden.

7. Schokoladenmasse nach einem der Ansprüche 1 bis 6, **dadurch gekennzeichnet, dass** sie zusätzlich einen Gehalt an CO₂-extrahierten Aromen aufweist, vorzugsweise Aromen aus Himbeere und/oder Kiwi und/oder Hagebutte und/oder Ingwer.

8. Schokoladenmasse nach einem der Ansprüche 1 bis 7, **dadurch gekennzeichnet, dass** sie zusätzlich einen Gehalt des Thiamin- (Vitamin B1-) Derivats Benfotiamin aufweist.

9. Schokoladenmasse nach einem der Ansprüche 1 bis 8, **dadurch gekennzeichnet, dass** sie zusätzlich einen Gehalt an Vitamin D aufweist.

10. Schokoladenmasse nach einem der Ansprüche 1 bis 9, **dadurch gekennzeichnet, dass** sie zusätzlich einen Gehalt an Carnitin aufweist.

11. Schokoladenmasse nach einem der Ansprüche 1 bis 10, **dadurch gekennzeichnet, dass** sie zusätzlich einen Gehalt an Kreatin aufweist.

12. Verwendung einer Schokoladenmasse nach einem der Ansprüche 1 bis 11 zur Herstellung eines Schokoladenerzeugnisses gemäß Anlage 1, Nr. 3 bis 10 und 2 (c) und 2 (d) der deutschen Kakaoverordnung vom 15. Dezember 2003 (BGB1. I S. 2738), zuletzt geändert durch Artikel 2 der Verordnung vom 30. September 2008 (BGB1. I S. 1911).

13. Schokoladenerzeugnisse aus einer Schokoladenmasse nach einem der Ansprüche 1 bis 11, **dadurch gekennzeichnet, dass** die Schokoladenmasse mit einem glutenfreien Lebensmittelextrudat kombiniert ist, das einen Gehalt an Eiweiß von mindestens 30% Gewicht/Gewicht und einen Gehalt an Kohlenhydraten von höchstens 40% Gewicht/Gewicht aufweist, wobei der Gehalt an Kohlenhydraten in Form von amylosehaltiger Stärke mindestens 20% Gewicht/Gewicht beträgt und das mindestens 2% Mehle aus Samen und/oder Kernen enthält, die reich an sekundären Pflanzenstoffen sind.

14. Schokoladenmasse nach einem der Ansprüche 1 bis 11 oder Schokoladenerzeugnis gemäß Anspruch 12 oder 13 zur Anwendung in der präventiven oder therapeutischen Behandlung von Krankheiten aus der Gruppe umfassend: Zöliakie, Diabetes mellitus Typ-2, neurodegenerative Krankheiten, insbesondere Alzheimer, Tumorerkrankungen, sowie Erkrankungen, die zu einer Kachexie (Auszehrung) führen, die mit entzündlichen Prozessen einhergehen oder davon verursacht werden, insbesondere Rheuma, rheumatoide Arthritis, entzündliche Darmerkrankungen wie Ulzerative Colitis, Morbus Crohn, Darmerkrankungen wie das Leaky-Gut-Syndrom (durchlässiger Darm).

## Claims

1. Chocolate mass with a content of cocoa mass and a content of added sugars, **characterized in that** the added sugars have a glycemic index of less than 35 (GI < 35) in each case, **in that** the content of added sugars on the whole and the chocolate mass on the whole have a glycemic index of less than 29 (GI < 29), **in that** the added sugars comprise a fraction of galactose that represents at least 10 % of the content of added sugars on the whole and that is higher than a fraction, which may or may not be present, of lactose, **in that** the added sugars additionally comprise a content of isomaltulose and/or tagatose and/or trehalose and/or ribose, **in that** the chocolate mass has a content of vitamin E in the form of a tocotrienol-tocopherol mixture from natural sources, and **in that** the content in the chocolate mass of tocotrienols is greater than the content of tocopherols.

2. Chocolate mass according to claim 1, **characterized in that** it additionally has a consent of sugar alcohols, in particular isomaltol and/or maltitol and/or erythritol, the content of sugar alcohols being lower than the content of sugars that are fully digestible by human enzymes.

3. Chocolate mass according to claim 1 or 2, **characterized in that** it additionally has a content of Stevia.

4. Chocolate mass according to one of claims 1 to 3, **characterized in that** it additionally has a content of indigestible multiple sugars, in particular inulin or oligofructose or resistant starch.

5. Chocolate mass according to one of claims 1 to 4, **characterized in that** it additionally has a content of omega-3 fatty acids and/or medium-chain triglycerides ("MCTs").

6. Chocolate mass according to one of claims 1 to 5, **characterized in that** it additionally has a content of secondary plant substances, which are selected from the group comprising: glucosinolates, carotenoids, lectins, flavonoids, phytosterols, polyphenols, in particular curcumin, ellagic acid, quercetin, resveratrol, delphinidin, diallyl sulfide, epigallocatechin-3-gallate, genistein, indol-3-carbinol, isoterpene, limonene, lycopene, OPC, salvestrol, sulforaphane and ubiquinone, and which are added via natural sources, such as seeds, fruits and kernel or seed flours.

7. Chocolate mass according to one of claims 1 to 6, **characterized in that** it additionally has a content of CO₂-extracted flavors, preferably flavors from raspberry and/or kiwi and/or rose hip and/or ginger.

8. Chocolate mass according to one of claims 1 to 7, **characterized in that** it additionally has a content of the thiamine (vitamin B1) derivative benfotiamine.

9. Chocolate mass according to one of claims 1 to 8, **characterized in that** it additionally has a content of vitamin D.

10. Chocolate mass according to one of claims 1 to 9, **characterized in that** it additionally has a content of carnitine.

11. Chocolate mass according to one of claims 1 to 10, **characterized in that** it additionally has a content of creatine.

12. Use of a chocolate mass as claimed in one of claims 1 to 11 for manufacturing a chocolate good as claimed in Annex 1, nos. 3 to 10 and 2 (c) and 2 (d) of the German Cocoa Regulation of 15 December 2003 (Official Journal: BGBl. I p. 2738), last amended by Article 2 of the Regulation of 30 September 2008 (Official Journal: BGBl. I p. 1911).

13. Chocolate goods formed from a chocolate mass as claimed in one of claims 1 to 11, **characterized in that** the chocolate mass is combined with a gluten-free foodstuff extrudate that has a content of protein of at least 30 % weight per weight and a content of carbohydrates of at most 40 % weight per weight, the content of carbohydrates in the form of amylose-containing starch being at least 20 % weight per weight and that contains at least 2 % of flours from seeds and/or kernels that are rich in secondary plant substances.

14. Chocolate mass according to one of claims 1 to 11 or chocolate good according to claim 12 or 13 for use in the preventative or therapeutic treatment of illnesses from the group comprising: celiac disease, type 2 diabetes mellitus, neurodegenerative diseases, in particular Alzheimer's disease, tumors, and illnesses that lead to cachexia (wasting syndrome), which accompany inflammatory processes or are caused thereby, in particular rheumatism, rheumatoid arthritis, inflammatory intestinal diseases such as ulcerative colitis and crohn's disease, and intestinal diseases such as leaky-gut syndrome (bowel hyperpermeability).

## Revendications

1. Matière de chocolat avec une teneur en matière de cacao et une teneur en sucres ajoutés, **caractérisée en ce que** les sucres ajoutés présentent chacun un index glycémique inférieur à 35 (GI<35), **en ce que** la teneur en sucres ajoutés dans son ensemble et la matière de chocolat dans son ensemble présentent un index glycémique inférieur à 29 (GI<29), **en ce que** les sucres ajoutés comprennent une fraction de galactose qui représente au moins 10 % de la teneur en sucres ajoutés et qui est supérieure à une fraction de lactose éventuellement présente, **en ce que** les sucres ajoutés comprennent en outre une teneur en isomaltulose et/ou en tagatose et/ou en tréhalose et/ou en ribose, **en ce que** la matière de chocolat présente une teneur en vitamine E sous la forme d'un mélange tocotriénol-tocophérol de source naturelle, et **en ce que** la teneur en tocotriénols dans la matière de chocolat est supérieure à la teneur en tocophérols.

2. Matière de chocolat selon la revendication 1, **caractérisée en ce qu'**elle présente en outre une teneur en sucres-alcools, notamment en isomalt et/ou en maltitol et/ou en érythritol, la teneur en sucres-alcools étant inférieure à la teneur en sucres entièrement digestibles par des enzymes humains.

3. Matière de chocolat selon la revendication 1 ou 2, **caractérisée en ce qu'**elle présente en outre une teneur en stévia.

4. Matière de chocolat selon l'une des revendications 1 à 3, **caractérisée en ce qu'**elle présente en outre une teneur en oligosaccharides non digestibles, notamment en inulin ou en oligofructose ou en amidon résistant.

5. Matière de chocolat selon l'une des revendications 1 à 4, **caractérisée en ce qu'**elle présente en outre un teneur en acides gras oméga 3 et/ou en triglycérides à chaîne moyenne (TCM).

6. Matière de chocolat selon l'une des revendications 1 à 5, **caractérisée en ce qu'**elle présente en outre une teneur en substances végétales secondaires qui sont choisies dans le groupe comprenant : les glucosinolates, les caroténoïdes, les lectines, les flavonoïdes, les phytostérols, les polyphénols, notamment la curcumine, l'acide ellagique, la quercétine, le resvératrol, la delphinidine, le disulfure d'allyle, l'épigallocatéchine gallate, la génistéine, l'indole-3-carbinol, les isoterpènes, la limonine, le lycopène, les OPC, les salvestroles, le sulforaphane et l'ubiquinone, qui peuvent sont apportées via des sources naturelles telles que les graines, les fruits et les farines de noyaux ou de graines.

7. Matière de chocolat selon l'une des revendications 1 à 6, **caractérisée en ce qu'**elle présente en outre une teneur en arômes extraits au CO₂, de préférence des arômes de framboise et/ou de kiwi et/ou de cynorrhodon et/ou de gingembre.

8. Matière de chocolat selon l'une des revendications 1 à 7, **caractérisée en ce qu'**elle présente en outre une teneur en benfotiamine, un dérivé de la thiamine (vitamine B1).

9. Matière de chocolat selon l'une des revendications 1 à 8, **caractérisée en ce qu'**elle présente en outre une teneur en vitamine D.

10. Matière de chocolat selon l'une des revendications 1 à 9, **caractérisée en ce qu'**elle présente en outre une teneur en carnitine.

11. Pate de chocolat selon l'une des revendications 1 à 10, **caractérisée en ce qu'**elle présente en outre une teneur en créatine.

12. Utilisation d'une matière de chocolat selon l'une des revendications 1 à 11 pour la fabrication de produits de chocolat selon l'annexe 1, Nr. 3 à 10 et 2 (c) et 2 (d) de l'ordonnance allemande sur le cacao du 15 décembre 2003 (BGBI. I, page 2738), modifiée pour la dernière fois par l'article 2 de l'ordonnance du 30 septembre 2008 (BGBI. I page 1911).

13. Produit de chocolat à base de matière de chocolat selon l'une des revendications 1 à 11, **caractérisé en ce que** la matière de chocolat est combinée à un extrudat de produit alimentaire exempt de gluten et qui présente une teneur en protéine d'au moins 30 % poids/poids et une teneur en glucides d'au plus 40 % poids/poids, la teneur en glucides sous la forme d'amidon contenant de l'amylose s'élevant à au moins 20 % poids/poids et qui contient au moins 2 % de farines de graines e/ou de noyaux qui sont riches en substances végétales secondaires.

14. Matière de chocolat selon l'une des revendications 1 à 11 ou produit de chocolat selon l'une des revendications 12 ou 13 pour une utilisation dans le traitement préventif ou thérapeutique de maladies du groupe comprenant : la maladie coeliaque, le diabète mellitus de type 2, les maladies neurodégénératives, notamment la maladie d'Alzheimer, les maladies tumorales, ainsi que les maladies qui conduisent à une cachexie (émaciation), qui s'accompagnent de processus inflammatoires ou qui sont provoqués par ceux-ci, notamment les rhumatismes, l'arthrite rhumatoïde, les maladies intestinales inflammatoires telles que la colite ulcéreuse, la maladie de Crohn, les maladies intestinales telles que le syndrome de Leaky-Gut (hyperperméabilité intestinale).
